**Europäisches Patentamt**

**European Patent Office**

**Office européen des brevets**

(19)

(11) Veröffentlichungsnummer : **0 361 254 B1**

(12) # EUROPÄISCHE PATENTSCHRIFT

(45) Veröffentlichungstag der Patentschrift :
**19.08.92 Patentblatt 92/34**

(51) Int. Cl.$^5$ : **H02M 3/137**

(21) Anmeldenummer : **89117201.7**

(22) Anmeldetag : **18.09.89**

(54) **Verfahren und Regelanordnung zur Regelung der Ausgangsspannungen von zwei Gleichstromstellern.**

(30) Priorität : **24.09.88 DE 3832545**

(43) Veröffentlichungstag der Anmeldung :
**04.04.90 Patentblatt 90/14**

(45) Bekanntmachung des Hinweises auf die
Patenterteilung :
**19.08.92 Patentblatt 92/34**

(84) Benannte Vertragsstaaten :
**AT BE CH DE ES FR GB IT LI NL**

(56) Entgegenhaltungen :
**EP-A- 0 169 461**

(73) Patentinhaber : **Asea Brown Boveri
Aktiengesellschaft
Kallstadter Strasse 1
W-6800 Mannheim 31 (DE)**

(72) Erfinder : **Hückelheim, Klaus
Rosenbrunnenstrasse 17a
W-6940 Weinheim (DE)**

(74) Vertreter : **Rupprecht, Klaus, Dipl.-Ing. et al
c/o Asea Brown Boveri Aktiengesellschaft
Zentralbereich Patente Postfach 100351
W-6800 Mannheim 1 (DE)**

EP 0 361 254 B1

**Beschreibung**

Die Erfindung bezieht sich auf ein Verfahren und eine Regemlanordnung zur Regelung der Ausgangsspannungen von zwei eingangsseitig in Reihe geschalteten Gleichstromstellern bzw. Systemen aus Gleichstromstellern mit jeweils Hochsetz- und Tief-Hochsetz-Verhalten.

In der DE-Patentanmemldung DE-11-38 17 652 ist ein elektrisch betriebenes Schienentriebfahrzeug mit mindestens zwei Antriebsanlagen beschrieben, die jeweils mindestens eine Vierquadrantensteller, einen Gleichspannungszwischenkreis mit Zwischenkreiskondensator und einen selbstgeführten Wechselrichter zur Speisung mindestens eines Fahrmotors mit variabler Spannung und Frequenz aufweisen, wobei bei Wechselspannungs-Einspeisung jeder Vierquadrantensteller an einer eigenen Sekundärwicklung eines Transformators liegt und wobei die Vierquadrantensteller der Antriebsanlagen bei Einspeisung mit relativ hoher Gleichspannung über Schaltgeräte eingangsseitig in Reihe geschaltet sind.

Gemäß der von genannten DE-Patentanmeldung besteht eine Variante des Leistungsteils darin, anstelle der Vierquadrantensteller jeweils Systeme aus Tief- und Hochsetzstellern einzusetzen, die ebenfalls eingangsseitig und gegebenenfalls auch ausgangsseitig in Reihe geschalet sind.

Aus der EP-A1-169 461 ist eine Schaltungsanordnung zur Speisung von elektrischen Verbrauchern mit einer Gleichspannung bekannt, wobei eine Steuerschaltung eines als Strom-/Spannungs-Umsetzer dienenden Schaltreglers aus einer Hilfsspannungsquelle versorgt wird. Die Hilfsspannungsquelle ist durch einen weiteren Schaltregler gebildet, dessen Schaltglied parallel zum Eingang des Schaltreglers angeordnet ist.

Der Erfindung liegt die Aufgabe zugrunde, ein Verfahren zur Regelung der Ausgangsspannungen von zwei Gleichstromstellern der eingangs genannten Art anzugeben, das auch bei unterschiedlicher Belastung der beiden eingangsseitig in Reihe geschalteten Gleichstromsteller ein gutes dynamisches Verhalten aufweist. Desweiteren soll eine Regelanordnung hierzu angegeben werden. Unter Gleichstromstellern können dabei auch Systeme aus Gleichstromstellern mit jeweils Hochsetz- oder Tief-Hochsetz-Verhalten verstanden werden.

Diese Aufgabe wird bezüglich des Verfahrens in Verbindung mit den Merkmalen des Oberbegriffes des Anspruchs 1 erfindungsgemäß dadurch gelöst, daß als Hilfsregelgrößen die Summe ($U\Sigma$ = UD1 + Ud2) und die Differenz ($U\Delta$ = Ud1 - Ud2) der Ausgangsspannungen (Ud1,Ud2) der Gleichstromsteller gebildet und geregelt sowie zur Bildung der Tastverhältnisse für die Ansteuerung der Gleichstromsteller herangezogen werden, wobei die Summenspannung ($U\Sigma$) mit einem Sollwert der Summenspannung ($U\Sigma_{soll}$) bzw. die Differenzspannung ($U\Delta$) mit einem Sollwert der Differenzspannung ($U\Delta_{soll}$) verglichen werden, und daß zur Bildung des Tastverhältnisses für den ersten Gleichstromsteller bzw. das erste System die Summe aus dem über einen Summenspannungs-Regler geführten Soll-Istwertvergleich für die Spannungssumme ($U\Sigma$) und den über einen Differenzspannungs-Regler geführten Soll-Istwertvergleich für die Spannungsdifferenz ($U\Delta$) sowie zur Bildung des Tastverhältnisses für den zweiten Gleichstromsteller bzw. das zweite System die Differenz aus dem über den Summenspannungs-Regler geführten Soll-Istwertvergleich für die Spannungssumme ($U\Sigma$) und dem über den Differenzspannungs-Regler geführten Soll-Istwertvergleich für die Spannungsdifferenz ($U\Delta$) verwendet werden. Die Aufgabe wird bezüglich der Regemlanordnung in Verbindung mit den Merkmalen des Oberbegriffes des Anspruchs 10 erfindungsgemäß dadurch gelöst, daß in einer ersten Summationsstelle die Summenspannung ($U\Sigma$) der Ausgangsspannungen Ud1,Ud2 der Gleichstromsteller gebildet wird, daß eine erste Vergleichsstelle die Differenz zwischen einem Sollwert der Summenspannung ($U\Sigma_{soll}$) und der Summenspannung ($U\Sigma$) erzeugt und einem Summenspannungs-Regler zuleitet, daß eine zweite Vergleichsstelle die Differenzspannung ($U\Delta$) der Ausgangsspannungen Ud1, Ud2 bildet und einem Differenzspannungs-Regler zuführt, daß eine zweite Summationsstelle die Ausgangssignale des Summenspannungs-Reglers und des Differenzspannungs-Reglers addiert und daß eine dritte Vergleichsstelle die Ausgangssignale des Summenspannungs-Reglers und des Differenzsspannungs-Reglers voneinander subtrahiert, wobei die Ausgangssignale der zweiten Summationsstelle und der dritten Vergleichsstelle die Tastverhältnisse zur Ansteuerung der Gleichstromsteller darstellen.

Die mit der Erfindung erzielbaren Vorteile bestehen insbesondere darin, daß trotz der Verkopplung der beiden Gleichstromsteller infolge ihrer eingangsseitigen Reihenschaltung eine gute Dynamik der Regelung der Ausgangsspannungen beider Gleichstromsteller erzielt wird. Es wird vermieden, daß sich bei unterschledlicher Belastung der beiden Gleichstromsteller unterschiedliche Ausgangsspannungen einstellen.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:

Fig. 1 eine Schaltung mit zwei eingangsseitig in Reihe liegenden Gleichstromstellern inklusive Regelstruktur,

Fig. 2 eine erweiterte Schaltungsanordnung,

Fig. 3 eine Regelanordnung zur erweiterten Schaltungsanordnung,

Fig. 4 eine Schaltung mit zwei jeweils aus Tiefsetz- und Hochsetzsteller bestehenden Systemen,

Fig. 5 eine Regelanordnung zur Schaltung nach Fig. 4.

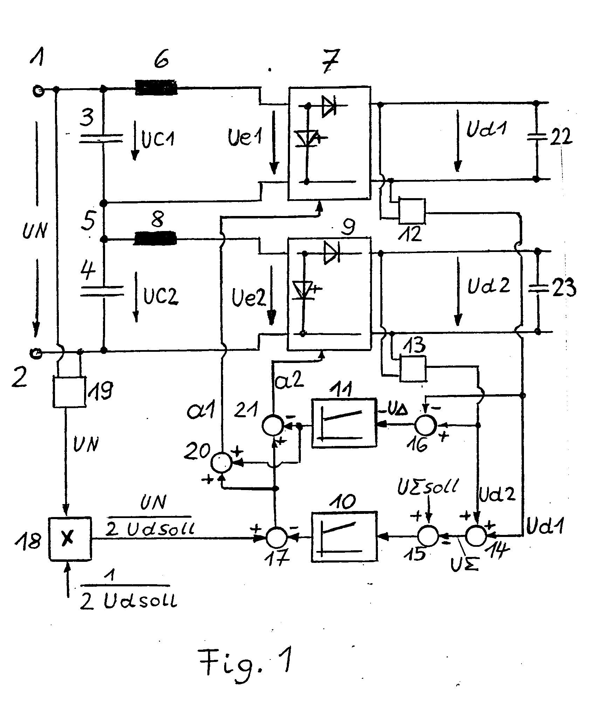

In Fig. 1 ist eine Schaltung mit zwei eingangsseitig in Reihe liegenden Gleichstromstellern inklusive Regelstruktur dargestellt. Zwischen dem Pluspol 1 und dem Minuspol 2 eines Gleichspannungsnetzes (Netzspannung = UN) sind zwei Kondensatoren 3, 4 in Reihe geschaltet. Der gemeinsame Verbindungspunkt beider Kondensatoren 3, 4 ist mit Ziffer 5 (= Mittelpunkt) bezeichnet. Die an den Kondensatoren 3 bzw. 4 anstehenden Kondensatorspannungen betragen UC1 bzw. UC2. Ein erster Gleichstromsteller 7 (Hochsetzsteller oder System aus Tief- und Hochsetzsteller) ist mit seiner ersten Eingangsklemme über eine Induktivität 6 mit dem Pluspol 1 sowie mit seiner zweiten Eingangsklemme direkt mit dem Mittelpunkt 5 verbunden. (Beim System Tief-Hochsetzsteller ist keine Induktivität 6 zwischen Pluspol 1 und Stellereingang vorhanden.) Der Gleichstromsteller 1 (Eingangsspannung = Ue1) dient zur Speisung eines ersten Gleichspannungszwischenkreises mit Zwischenkreiskondensator 22. Die Zwischenkreisspannung am Ausgang des Stellers 7 bzw. am Kondensator 22 ist mit Ud1 bezeichnet. Ein zweiter Gleichstromsteller 9 (Hochsetzsteller oder System aus Tief- und Hochsetzsteller) ist mit seiner ersten Eingangsklemme über eine Induktivität 8 mit dem Mittelpunkt 5 sowie mit seiner zweiten Eingangsklemme direkt mit dem Minuspol 2 verbunden. (Beim System Tief-Hochsetzsteller ist keine Induktivität 8 zwischen Mittelpunkt 5 und Stellereingang vorhanden.) Der Gleichstromsteller 9 (Eingangsspannung = Ue2) dient zur Speisung eines zweiten Gleichspannungszwischenkreises mit Zwischenkreiskondensator 23. Die Zwischenkreisspannung am Ausgang des Stellers 9 bzw. am Kondensator 23 ist mit Ud2 bezeichnet.

Zur Regelung der Zwischenkreisspannungen Ud1, Ud2 sind ein Summenspannungs-Regler 10 und ein Differenzspannungs-Regler 11 vorgesehen. Zur Bildung der Summenspannung $U\Sigma$ = Ud2 + Ud1 und der Differenzspannung $-U\Delta$ = Ud2 - Ud1 sind Spannungserfassungseinrichtungen 12 bzw. 13 für die Erfassung der Zwischenkreisspannungen Ud1 bzw. Ud2 vorgesehen. Eine Summationsstelle 14 addiert beide Spannungen Ud1, Ud2 und führt die Summenspannung $U\Sigma$ einer Vergleichsstelle 15 zu. Die Vergleichsstelle 15 bildet die Abweichung $U\Sigma_{Soll}$ - $U\Sigma$ und führt diese dem Summenspannungs-Regler 10 zu. Der Sollwert der Summenspannung $U\Sigma_{Soll}$ entspricht dabei dem doppelten Zwischenkreisspannungs-Sollwert $Ud_{soll}$, d.h. $U\Sigma_{soll}$ = $2Ud_{soll}$. Eine Vergleichsstelle 16 bildet die Differenz $-U\Delta$ = Ud2 - Ud1 und führt die Differenzspannung $-U\Delta$ dem Differenzspannungs-Regler 11 zu.

Dabei wurde vereinfachend vorausgesetzt, daß der Wert des Sollwertes der Differenzspannung $U\Delta_{soll}$ Null beträgt, so daß die entsprechende Vergleichsstelle für den $U\Delta_{soll}/U\Delta$-Vergleich nicht dargestellt ist:

$$(U\Delta_{soll} - U\Delta) = (0 - U\Delta) = -U\Delta.$$

Zur Ermittlung der zwischen Pluspol 1 und Minuspol 2 anliegenden Netzspannung UN (Gleichspannung) ist eine Spannungserfassungeinrichtung 19 vorgesehen. Die Netzspannung UN wird mittels eines Multiplizierers 18 mit dem Signal $1/(2\ Ud_{soll})$ zum Produkt $UN/(2\ Ud_{soll})$ multipliziert. In einer Vergleichsstelle 17 wird im Sinne einer Vorsteuerung die Differenz zwischen dem Produkt $UN/(2\ Ud_{soll})$ um den Ausgangswert des Summenspannungs-Reglers 10 gebildet. Das derart gebildete Signal wird in einer Summationsstelle 20 um den Ausgangswert des Differenzspannungs-Reglers 11 erhöht und in einer Vergleichsstelle 21 um den Ausgangswert des Summenspannungs-Reglers 11 vermindert. Das der Summationsstelle 20 entnehmbare Tastverhältnis a1 = Ue1/Ud1 dient als Stellgröße zur Ansteuerung des Gleichstromstellers 7 und das der Vergleichsstelle 21 entnehmbare Tastverhältnis a2 = Ue2/Ud2 dient als Stellgröße zur Ansteuerung des Gleichstromstellers 9.

Gemäß dem Regelziel soll der Sollwert der einzelnen Zwischenkreisspannungen $Ud1_{soll}$, $Ud2_{soll}$ einen vorgegebenen Wert, z.B. 2,8 KV, einhalten. Als Stellglieder dienen die beiden Gleichstromsteller 7, 9 und als Stellgrößen werden die beiden Tastverhältnisse a1, a2 der Steller herangezogen. Durch die Verwendung der Summenspannung $U\Sigma$ und Differenzspannung $U\Delta$ der beiden Zwischenkreisspannungen Ud1, Ud2 wird der Verkopplung der beiden Systeme 3, 6, 7, 22 und 4, 8, 9, 23 infolge ihrer eingangsseitigen Reihenschaltung Rechnung getragen. Der Summenspannungs-Regler 10 bewirkt, daß die Summenspannung $U\Sigma$ ihrem Sollwert $U\Sigma_{soll}$ = $2\ Ud_{soll}$ nachgeführt wird. Die Summenspannungs-Regelung beeinflußt dabei die Summe der Stellereingangsspannungen (= Summe der Tastverhältnisse a1 + a2). Eine Regelabweichung der Summenspannung $U\Sigma$ führt zu einer Änderung von a1 + a2 und damit von Ue1 + Ue2. Ist die Summenspannung $U\Sigma$ z.B. zu klein, so führt dies durch Verkleinerung von a1 + a2 und damit von Ue1 + Ue2 zu einem Anstieg des vom Netz aufgenommenen Stromes, damit zu einem Anstieg der übertragenen Leistung und somit schließlich zum Anstieg der Summenspannung $U\Sigma$.

Der Differenzspannungs-Regler bewirkt, daß die Differenzspannung $U\Delta$ = Ud1 - Ud2 zu Null wird. Eine Regelabweichung der Differenzspannung $U\Delta$ führt zu einer Änderung der Differenz zwischen a1 und a2. Ist die Zwischenkreisspannung Ud1 z.B. kleiner als die Zwischenkreisspannung Ud2, so führt dies zu einer Vergrößerung des Tastverhältnisses a1 bei gleichzeitiger Verkleinerung des Tastverhältnisses a2.

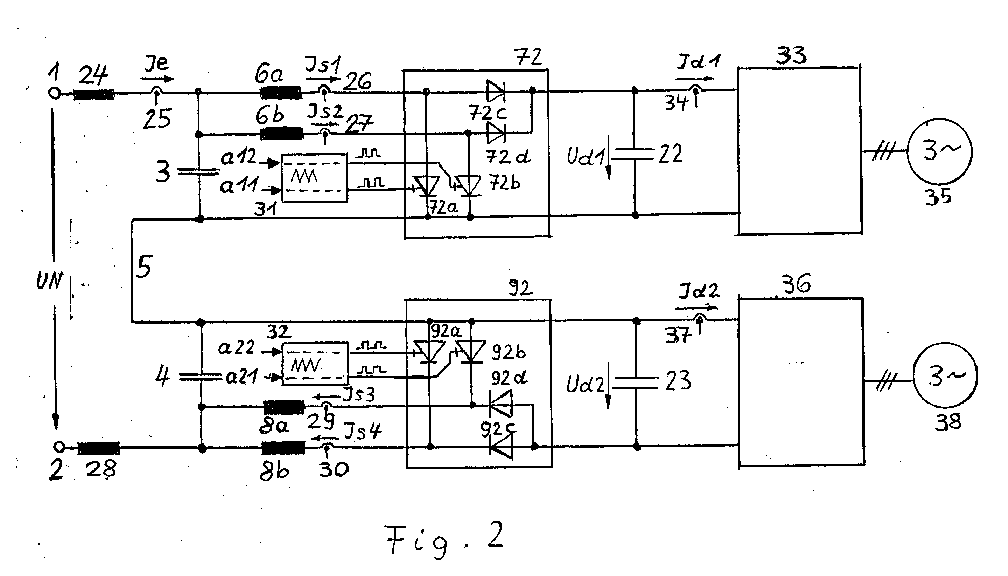

In Fig. 2 ist eine erweiterte Schaltungsanordnung dargestellt. Dabei sind Gleichstromsteller 72 bzw. 92

3

mit jeweils zwei zünd- und löschbaren Ventilen 72a, 72b bzw. 92a, 92b vorgesehen.

Mit der ersten Eingangsklemme des Gleichstromstellers 72 sind die Anode des Ventils 72a und die Anode der Diode 72c verbunden. An der zweiten Eingangsklemme liegen die Anode des Ventils 72b und die Anode der Diode 72d. Die Kathoden beider Dioden 72c, 72d sind zusammengeschaltet und bilden die erste Ausgangsklemme. Die dritte Eingangsklemme des Gleichstromstellers 72 ist mit den Kathoden beider Ventile 72a, 72b verbunden und bildet gleichzeitig die zweite Ausgangsklemme.

Mit der ersten Eingangsklemme des Gleichstromstellers 92 sind die Kathoden beider Ventile 92a, 92b verbunden. Die erste Eingangsklemme bildet gleichzeitig die erste Ausgangsklemme. An der zweiten Eingangsklemme liegen die Kathode des Ventils 92b und die Kathode der Diode 92d. An die dritte Eingangsklemme sind die Kathode des Ventils 92a und die Kathode der Diode 92c angeschlossen. Die Anoden beider Dioden 92c, 92d sind zusammengeschaltet und bilden die zweite Ausgangsklemme.

Die erste bzw. zweite Eingangsklemme des Stellers 72 sind jeweils über eigene Induktivitäten 6a bzw. 6b mit dem positiven Pol und die zweite bzw. dritte Eingangsklemme des Stellers 92 sind jeweils über eigene Induktivitäten 8a bzw. 8b mit dem negativen Pol verbunden. Zwischen dem Pluspol 1 und dem gemeinsamen Verbindungspunkt des Kondensators 3 und der Induktivitäten 6a, 6b liegen eine Induktivität 24 und eine Stromerfassungseinrichtung 25. Der erfaßte Eingangsstrom ist mit Ie bezeichnet. Zwischen der Induktivität 6a und der ersten Eingangsklemme 72 bzw. zwischen der Induktivität 6b und der zweiten Eingangsklemme des Stellers 72 sind Stromerfassungseinrichtungen 26 bzw. 27 vorgesehen. Die erfaßten Stellerströme sind mit Is1 bzw. Is2 bezeichnet. Zwischen dem Minuspol 2 und dem gemeinsamen Verbindungspunkt des Kondensators 4 und den Induktivitäten 8a, 8b liegt eine Induktivität 28. Zwischen der Induktivität 8a und der zweiten Eingangsklemme des Stellers 92 bzw. der Induktivität 8b und der dritten Eingangsklemme des Stellers 9a sind Stromerfassungseinrichtungen 29 bzw. 30 vorgesehen. Die erfaßten Stellerströme sind mit Is3 bzw. Is4 bezeichnet.

Der an den Verbindungspunkt 5 angeschlossene weitere Anschluß des Kondensators 3 ist mit der Eingangsklemme des Gleichstromstellers 72 verbunden, während der an den Verbindungspunkt 5 angeschlossene weitere Anschluß des Kondensators 4 an der ersten Eingangsklemme des Gleichstromstellers 92 liegt.

Zur Ansteuerung der zünd- und löschbaren Ventile (z.B. GTO-Thyristoren) 72a, 72b bzw. 92a, 92b der Gleichstromsteller 72 bzw. 92 sind Pulsweitenmodulatoren 31 bzw. 32 vorgesehen. Dem Pulsweitenmodulator 31 werden dabei die Tastverhältnisse a11 (für Ventil 72a), a12 (für Ventil 72b) und dem Pulsweitenmodulator 32 die Tastverhältnisse a21 (für Ventil 92b), a22 (für Ventil 92a) zugeleitet. Ausgangsseitig sind die Pulsweitenmodulatoren 31, 32 jeweils mit den Steuereingängen der entsprechenden Ventile verbunden.

An die Ausgangsklemmen des Gleichstromstellers 72 ist ein erster Gleichspannungszwischenkreis mit Zwischenkreiskondensator 22 sowie an die Ausgangsklemme des ersten Gleichstromstellers 92 ein zweiter Gleichspannungszwischenkreis mit Zwischenkreiskondensator 23 angeschlossen. An den ersten Gleichspannungszwischenkreis ist ein selbstgeführter Wechselrichter 33 angeschlossen. Zur Erfassung des Zwischenkreisstromes Id1 dient eine zwischen Steller 72 und Wechselrichter 33 geschaltete Stromerfassungseinrichtung 34. Der Wechselrichter 33 speist einen Drehstrommotor 35. An den zweiten Gleichspannungszwischenkreis ist ein selbstgeführter Wechselrichter 36 angeschlossen. Zur Erfassung des Zwischenkreisstromes Id2 dient eine zwischen Steller 92 und Wechselrichter angeordnete Stromerfassungseinrichtung 37. Der Wechselrichter 36 speist einen Drehstrommotor 38.

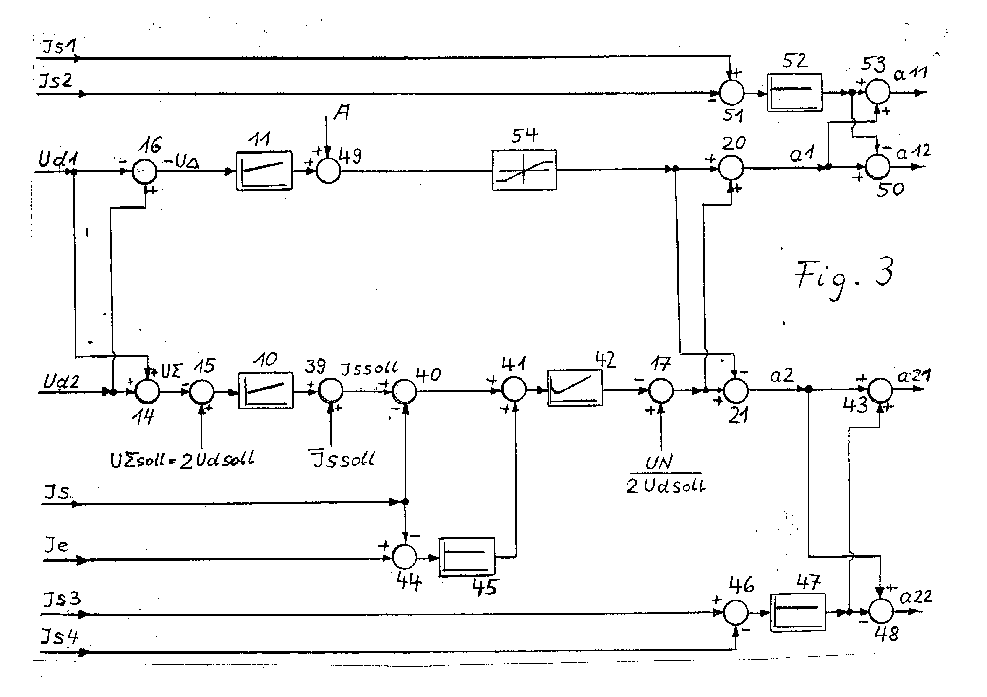

In Fig. 3 ist eine Regelanordnung zur erweiterten Schaltungsanordnung gemäß Fig. 2 dargestellt. Wie bereits unter Fig. 1 erwähnt, wird mit Hilfe der Summationsstelle 14 die Summenspannung $U\Sigma = Ud1 + Ud2$ gebildet. In der Vergleichsstelle 15 wird die Differenz zwischen dem Sollwert der Summenspannung $U\Sigma_{soll} = 2\ Ud_{soll}$ und der Summenspannung $U\Sigma$ gebildet und dem Summenspannungs-Regler 10 zugeführt. Das Ausgangssignal des Summenspannungs-Reglers 10 wird in einer Summationsstelle 39 mit dem Mittelwert des Stellerstrom-Sollwertes $\overline{Is}_{soll} = (Id1 + Id2)\ Ud_{soll}/UN$ im Sinne einer Vorsteuerung zum Stellerstrom-Sollwert $Is_{soll}$ addiert. Dieser Stellerstrom-Sollwert $Is_{soll}$ wird in einer Vergleichsstelle 40 um den Stellerstrom $Is = (Is1 + Is2 + Is3 + Is4)/2$ vermindert und gelangt über eine Summationsstelle 41 zum Stromregler 42. Mittels der Summationsstelle 41 wird zum Zwecke der Dämpfung (Vermeidung von Schwingungsvorgängen im Eingangsfilter 24, 28, 3, 4) die Ausgangsgröße eines Dämpfungsreglers addiert, wobei am Eingang des Dämpfungsreglers eine Größe liegt, die proportional zur Differenz aus Eingangsstrom (Fahrzeugeingangsstrom) und Stellereingangsstrom ist. Das Ausgangssignal des Stromreglers 42 wird in der Vergleichsstelle 17 vom Signal $UN/(2\ Ud_{soll})$ abgezogen (Vorsteuerung). Das Ausgangssignal der Vergleichsstelle 17 wird einer Summationsstelle 20 und einer Vergleichsstelle 21 zugeleitet, wie bereits unter Fig. 1 erwähnt. Das Ausgangssignal der Vergleichsstelle 21 - das Tastverhältnis a2 - wird einer Summationsstelle 43 zugeleitet, der ausgangsseitig das Tastverhältnis a21 entnehmbar ist.

Der Eingangsstrom Ie wird einer Vergleichsstelle 44 zugeleitet, die den Eingangsstrom Ie um den Stellerstrom Is vermindert und dieses Differenzsignal über einen Dämpfungsregler 45 auf die Summationsstelle 41 aufschaltet. Eine Vergleichsstelle 46 bildet das Differenzsignal Is3 - Is4 und führt dieses über einen Symme-

EP 0 361 254 B1

trierregler 47 zur Summationsstelle 43 und - mit negativem Vorzeichen - zu einer Vergleichsstelle 48. Die Vergleichsstelle 48 empfängt mit positivem Vorzeichen das Tastverhältnis a2 und gibt ausgangsseitig das Tastverhältnis a22 ab.

Durch die im Vergleich zur Anordnung gemäß Fig. 1 neuen Bauteile 39 bis 42 und 44, 45 wird dem Summenspannungs-Regelkreis eine Strom(begrenzungs)-Regelung für den vom Netz aufgenommenen Eingangsstrom Ie unterlagert, der seinerseits einen Dämpfungsregler enthält, um Schwingungen im Eingangsfilter 24, 28, 3, 4 zu verhindern.

Die Vergleichsstelle 16 bildet die Differenzspannung $-U\Delta = Ud2 - Ud1$ und führt diese dem Differenzspannungs-Regler 11 zu, wie bereits unter Fig. 1 erwähnt. Das Ausgangssignal des Differenzspannungs-Reglers 11 wird in einer Summationsstelle 49 im Sinne einer Vorsteuerung mit einem Signal $A = ((Id1 - Id2)/(Id1 + Id2)) \cdot (UN/(2\ Ud_{soll}))$ summiert. Das Ausgangssignal der Summationsstelle 49 wird über einen Begrenzer der Summationsstelle 20 und - mit negativem Vorzeichen - der Vergleichsstelle 21 zugeleitet. Der Begrenzer 54 dient zur Begrenzung des Ausgangssignals des Differenzspannungs-Regelkreises 11 bzw. des mit dem Signal A vorgesteuerten Ausgangssignals auf die maximal zulässige Differenz zwischen den Kondensatorspannungen Uc1 und Uc2. Das der Summationsstelle 20 entnehmbare Ausgangssignal - das Tastverhältnis a1 - wird einer Vergleichsstelle 50 zugeführt. Die Vergleichsstelle 50 gibt ausgangsseitig das Tastverhältnis a12 ab. Eine Vergleichsstelle 51 bildet das Differenzsignal Is1 - Is2 und leitet dieses über einen Symmetrierregler 52 zu einer Summationsstelle 53 und - mit negativem Vorzeichen - zur Vergleichsstelle 50. Die Summationsstelle 53 empfangt eingangsseitig das Tastverhältnis a1. Der Summationsstelle 53 ist das Tastverhältnis all entnehmbar.

Durch die Vorsteuerungen mittels des Signals A, des Mittelwertes des Stellerstrom-Sollwertes $\overline{Is}_{soll} = (Id1 + Id2)\ Ud_{soll}/UN$ und des Signals $UN/(2\ Ud_{soll})$ wird erreicht, daß die Regler 10, 11 und 42 im stationären Fall auf dem Wert Null bleiben.

Bei ungleicher Antriebsleistung der beiden Systeme 72-33-35 und 92-36-38 stellen sich unterschiedliche Spannungen Ue1, Ue2 an den Stellereingängen ein.

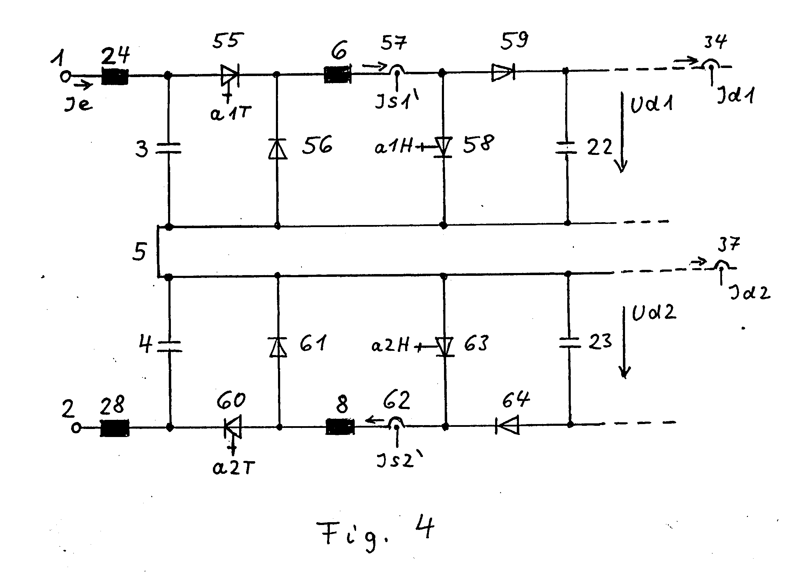

In Fig. 4 ist eine Schaltung mit zwei jeweils aus Tiefund Hochsetzstellern bestehenden Systemen dargestellt. Dabei sind die Anode eines zünd- und löschbaren Ventils 55 und die erste Klemme des Kondensators 3 über die Induktivität 24 mit dem Pluspol 1 verbunden. Das Ventil 55 liegt andererseits über der Induktivität 6 einer Stromerfassungseinrichtung 57 und einer Diode 59 an der ersten Klemme des Zwischenkreiskondensators 22. Die Stromerfassungseinrichtung 57 dient zur Ermittlung des Stellerstromes Is1' des ersten Systems. An den gemeinsamen Verbindungspunkt von Ventil 55 und Induktivität 6 ist eine Diode 56 mit ihrer Kathode und an den gemeinsamen Verbindungspunkt von Diode 59 und Stromerfassungseinrichtung 57 ist ein zünd- und löschbares Ventil 58 mit seiner Anode angeschlossen. Die weiteren Anschlüsse von Diode 56 und Ventil 58 liegen an den miteinander verbundenen zweiten Klemmen der Kondensatoren 3 und 22. Am Zwischenkreiskondensator 22 liegt wiederum die Zwischenkreisspannung Ud1 an.

Der Minuspol 2 ist über die Induktivität 28 mit der ersten Klemme des Kondensators 4 und mit der Kathode eines zünd- und löschbaren Ventils 60 verbunden. Das Ventil 60 liegt andererseits über der Induktivität 8, einer Stromerfassungseinrichtung 62 und einer Diode 64 an der ersten Klemme des Zwischenkreiskondensators 23. Die Stromerfassungseinrichtung 62 dient zur Ermittlung des Stellerstromes Is2' des zweiten Systems. An den gemeinsamen Verbindungspunkt von Ventil 60 und Induktivität 8 ist eine Diode 61 mit ihrer Anode und an den gemeinsamen Verbindungspunkt von Diode 64 und Stromerfassungseinrichtung 62 ist ein zünd- und löschbares Ventil 63 mit seiner Kathode angeschlossen. Die Weiteren Anschlüsse von Diode 61 und Ventil 63 liegen an den miteinander verbundenen zweiten Klemmen der Kondensatoren 4 und 23. Am Zwischenkreiskondensator 23 liegt wiederum die Zwischenkreisspannung Ud2 an. Die jeweils zweiten Klemmen der Kondensatoren 3, 22, 4, 23 sind über den gemeinsamen Verbindungspunkt 5 (Mittelpunkt) miteinander verbunden, so daß sich eine eingangsseitige Reihenschaltung der beiden Systeme ergibt.

Die Tastverhältnisse der Ventile 55, 58, 60, 63 sind mit a1T, a1H, a2T, a2H bezeichnet. Der Eingangsstrom beträgt wiederum Ie. Die Zwischenkreisströme Id1, Id2 werden wiederum mittels Stromerfassungseinrichtungen 34, 37 ermittelt.

Allgemein wird zur Erläuterung der Funktionsweise der Schaltung gemäß Fig. 4 auf die DE-Patentanmeldung P 37 24 526.0 hingewiesen.

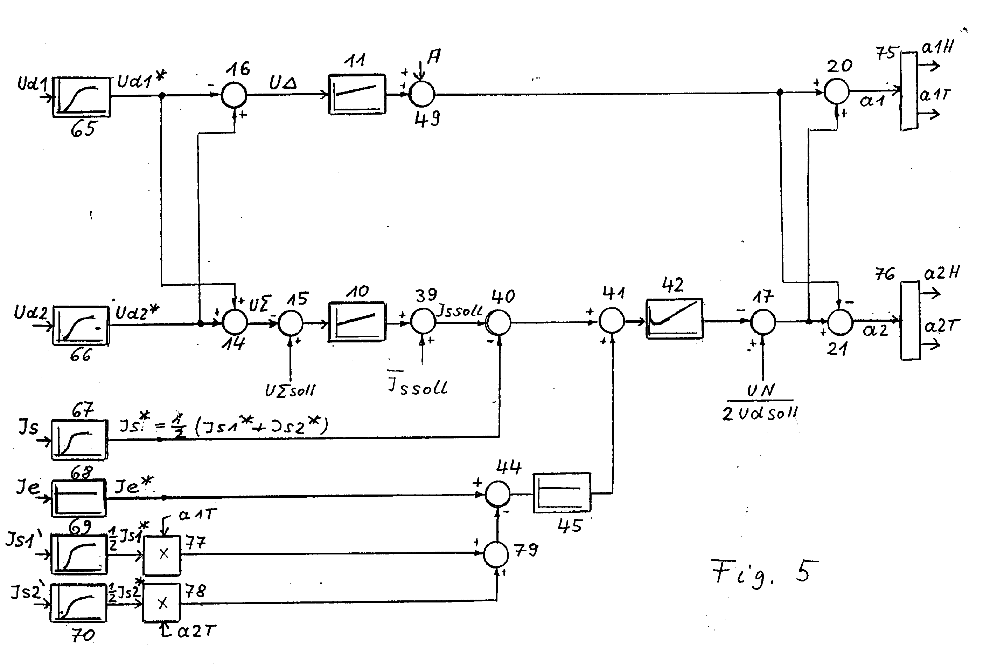

In Fig. 5 ist eine Regelanordnung zur Schaltung nach Fig. 4 dargestellt. Die Istwerte Ud1, Ud2, Is, Ie, Is1', Is2' werden über Filter 65, 66, 67, 68, 69, 70 geglättet. Die an den Ausgängen der Filter anstehenden Werte sind mit Ud1*, Ud2*, Is* $= 1/2\ (Is1* + Is2*)$, Ie*, $1/2Is1*$, $1/2Is2*$ bezeichnet. Die weitere Verarbeitung der Werte Ud1*, Ud2* mit Hilfe der Bauglieder 16, 11, 49, 20 und 14, 15, 10, 39, 40, 41, 42, 17, 21 sowie 44, 45 erfolgt wie unter Fig. 3 beschrieben. Als stationärer Stellerstrom-Sollwert (Mittelwert) wird der Summationsstelle 39 die Größe $\overline{Is}_{soll} = 1/2(((Id1 + Id2)/IeN)/(Ud/UN))$ zugeführt (wobei IeN = Nenn-Eingangsstrom). Der Vergleichsstelle 40 liegt

5

die Größe Is* an. Aus den Tastverhältnissen a1 bzw. a2 (= gemeinsame Stellgrößen) werden mittels Tastverhältnisbildnern 75 bzw. 76 die Tastverhältnisse a1H, a1T bzw. a2H, a2T erzeugt.

Der Vergleichsstelle 44 werden die in einer Summationsstelle 79 addierten Ausgangssignale zweier Multiplizierer 77, 78 zugeleitet, wobei der Multiplizierer 77 das Produkt $1/_2$Is1* · a1T und der Multiplizierer 78 das Produkt $1/_2$Is2* · a2T bildet.

Die Tastverhältnisse der Hochsetzsteller a1H, a2H und der Tiefsetzsteller a1T, a2T werden in der Weise aus den gemeinsamen Stellgrößen a1, a2 gebildet, daß bei kleinen Netzspannungen UN und permanent eingeschaltetem, also nichttaktendem Tiefsetzsteller das Tastverhältnis des Hochsetzstellers mit der gemeinsamen Stellgröße a1, a2 identisch ist, daß bei größeren Netzspannungen UN und permanent eingeschaltetem, also nichttaktendem Hochsetzsteller das Tastverhältnis des Tiefsetzstellers umgekehrt proportional zur gemeinsamen Stellgröße a1, a2 ist und daß im Übergangsbereich dazwischen, wenn Hoch- und Tiefsetzsteller takten, das Tastverhältnis des Tiefsetzstellers a1T bzw. a2T als Quotient a1H/a1 bzw. a2H/a2 zwischen dem Tastverhältnis der Hochsetzsteller und der gemeinsamen Stellgröße gebildet wird.

Durch arithmetische Verknüpfung oder angenähert durch Kennlinien wird dadurch erreicht, daß das Produkt a1H · a1T bzw. a2H · a2T aus dem Tastverhältnis a1H bzw. a2H des Hochsetzstellers und dem Tastverhältnis des Tiefsetzstellers a1T bzw. a2T gleich der gemeinsamen Stellgröße a1 bzw. a2 ist. Die gemeinsame Stellgröße a1 bzw. a2 ist dann auch für ein Tief-Hochsetzsteller-System proportional der Spannungsübersetzung UC1/Ud1 bzw. UC2/Ud2 des jeweiligen gesamten Stellersystems.

## Patentansprüche

1. Verfahren zur Regelung der Ausgangsspannungen von zwei eingangsseitig in Reihe geschalteten Gleichstromstellern bzw. Systemen aus Gleichstromstellern mit jeweils Hochsetz- oder Tief-Hochsetz-Verhalten, <u>dadurch gekennzeichnet,</u> daß als Hilfsregelgrößen die Summe (UΣ = Ud1 + Ud2) und die Differenz (UΔ = Ud1 - Ud2) der Ausgangsspannungen (Ud1, Ud2) der Gleichstromsteller (7, 9, 72, 92) gebildet und geregelt sowie zur Bildung der Tastverhältnisse (a1, a2 und a11, a12, a21, a22 bzw. a1H, a1T, a2H, a2T) für die Ansteuerung der Gleichstromsteller herangezogen werden, wobei die Summenspannung (UΣ) mit einem Sollwert der Summenspannung (UΣ$_{soll}$) bzw. die Differenzspannung (UΔ) mit einem Sollwert der Differenzspannung (uΔ$_{soll}$) verglichen werden, und daß zur Bildung des Tastverhältnisses (a1) für den ersten Gleichstromsteller (7) bzw. das erste System die Summe aus dem über einen Summenspannungs-Regler (10) geführten Soll-Istwertvergleich für die Spannungssumme (UΣ) und dem über einen Differenzspannungs-Regler (11) geführten Soll-Istwertvergleich für die Spannungsdifferenz (UΔ) sowie zur Bildung des Tastverhältnisses (a2) für den zweiten Gleichstromsteller (9) bzw. das zweite System die Differenz aus dem über den Summenspannungs-Regler (10) geführten Soll-Istwertvergleich für die Spannungssumme (UΣ) und dem über den Differenzspannungs-Regler (11) geführten Soll-Istwertvergleich für die Spannungsdifferenz (UΔ) verwendet werden.

2. Verfahren nach Anspruch 1, dadurch gekennzeichnet, daß der Regelung für die Summenspannung (UΣ) eine Stromregelung für die Eingangsströme der Steller (Is1, Is2, Is3, Is4) mit der Möglichkeit der Strombegrenzung unterlagert wird, deren Sollwert (Is$_{soll}$) proportional der Summe aus beiden Ausgangsströmen der Steller (Id1, Id2) ist.

3. Verfahren nach Anspruch 2 , dadurch gekennzeichnet, daß ein Dämpfungsregler (45) vorgesehen ist, an dessen Eingang eine Größe proportional zur Differenz aus dem Eingangsstrom der Gesamtschaltung (Ie) und dem Eingangsstrom der Steller (Is) anliegt und dessen Ausgangsgröße zum Sollwert (Is$_{soll}$) des unterlagerten Stromregelkreises addiert wird.

4. Verfahren nach einem der vorstehenden Ansprüche 1 bis 3, dadurch gekennzeichnet, daß als Vorsteuerung für die Differenzspannungsregelung eine Größe (A) herangezogen wird, die proportional zur Differenz der Ausgangsströme (Id1, Id2) der Steller ist.

5. Verfahren nach einem der vorstehenden Ansprüche 1 bis 4, dadurch gekennzeichnet, daß als Vorsteuerung für die Summenspannungsregelung eine Größe (UN/2 Ud$_{soll}$) herangezogen wird, die proportional zur Eingangsspannung (UN) ist.

6. Verfahren nach einem der vorstehenden Ansprüche 1 bis 5, dadurch gekennzeichnet, daß der Sollwert (Is$_{soll}$) des unterlagerten Stromregelkreises zum Zwecke der Vorsteuerung durch Addition des Ausgangssignales des Summenspannungs-Reglers (10) mit einem stationären Stellerstrom-Sollwert (Is$_{soll}$) gebildet wird, wobei der stationäre Stellerstrom-Sollwert proportional zur Summe der Ausgangsströme (Id1, Id2) ist.

7. Verfahren nach einem der vorstehenden Ansprüche 1 bis 6, dadurch gekennzeichnet, daß der Absolutwert der Differenzspannung (UΔ) auf die maximal zulässige Differenz zwischen den Eingangsspannungen (UC1, UC2) an den Stellern (7,9) begrenzt wird.

8. Verfahren nach einem der vorstehenden Ansprüche 1 bis 7, dadurch gekennzeichnet, daß das Tastverhältnis eines Hochsetzstellers (a1H bzw. a2H) und eines Tiefsetzstellers (a1T und a2T) aus der gemeinsamen Stellgröße(a1 bzw. a2) in der Weise gebildet wird, daß bei kleiner Eingangsspannung (UN) und permanent eingeschaltetem Tiefsetzsteller das Tastverhältnis des Hochsetzstellers mit der gemeinsamen Stellgröße (a1 bzw. a2) identisch, daß bei großer Eingangsspannung (UN) und permanent eingeschaltetem Hochsetzsteller das Tastverhältnis des Tiefsetzstellers umgekehrt proportional zur gemeinsamen Stellgröße (a1 oder a2) ist und daß in dem Übergangsbereich zwischen kleiner und großer Eingangsspannung, in dem Hoch- und Tiefsetzsteller takten, das Tastverhältnis des Tiefsetzstellers (a1T bzw. a2T) als Quotient (a1H/a1 bzw. a2H/a2) zwischen dem Tastverhältnis des Hochsetzstellers und der gemeinsamen Stellgröße gebildet wird.

9. Verfahren nach einem der Ansprüche 1 bis 8, dadurch gekennzeichnet, daß die gemeinsame Stellgröße (a1 bzw. a2) im gesamten Betriesbereich proportional zum Verhältnis zwischen Eingangs- und Ausgangsspannung des Stellers (UC1/Ud1 bzw. UC2/Ud2) ist.

10. Regelanordung zur Regelung der Ausgangsspannungen von zwei eingangsseitig in Reihe geschalteten Gleichstromstellern, dadurch gekennzeichnet, daß in einer ersten Summationsstelle (14) die Summenspannung (UΣ) der Ausgangsspannungen (Ud1, Ud2) der Gleichstromsteller (7, 9, 72, 92) gebildet wird, daß eine erste Vergleichsstelle (15) die Differenz zwischen einem Sollwert der Summenspannung (UΣ soll) und der Summenspannung (UΣ) erzeugt und einem Summenspannungs-Regler (10) zuleitet, daß eine zweite Vergleichsstelle (16) die Differenzspannung (UΔ) der Ausgangsspannungen (Ud1, Ud2) bildet und einem Differenzspannungsregler (11) zuführt, daß eine zweite Summationsstelle (20) die Ausgangssignale des Summenspannungs-Reglers (10) und des Differenzspannungs-Reglers (11) addiert und daß eine dritte Vergleichsstelle (21) die Ausgangssignale des Summenspannungs-Reglers (10) und des Differenzspannungs-Reglers (11) voneinander subtrahiert, wobei die Ausgangssignale der zweiten Summationsstelle (20) und der dritten Vergleichsstelle (21) die Tastverhältnisse (a1, a2) zur Ansteuerung der Gleichstromsteller (7, 9) darstellen.

11. Regelanordnung nach Anspruch 10, dadurch gekennzeichnet, daß das Ausgangssignal des Summenspannungs-Reglers (10) in einer vierten Vergleichsstelle (17) von einer Vorsteuergröße (UN/2 $Ud_{soll}$) abgezogen wird, wobei UN die den Gleichstromstellern anliegende Gleichspannung und $Ud_{soll}$ den Ausgagsspannungs-Sollwert eines Gleichstromstellers darstellen.

## Claims

1. Method for regulating the output voltages of two DC chopper converters or systems of DC chopper converters which are connected in series at the input end and in each case have step-up and step-down/up characteristics, <u>characterised in that</u> the sum (UΣ = Ud1 + Ud2) and the difference (UΔ = Ud1 - Ud2) of the output voltages (Ud1,Ud2) of the DC chopper converters (7, 9, 72, 92) are formed and regulated as auxiliary manipulated variables and are used for forming the duty ratios (a1, a2 and a11, a12, a21, a22 and, respectively, a1H, a1T, a2H, a2T) for driving the DC chopper converters, the sum voltage (UΣ) being compared with a setpoint value of the sum voltage ($U\Sigma_{soll}$) and the difference voltage (UΔ) being compared with a setpoint value of the difference voltage ($U\Delta_{soll}$), and in that the sum of the setpoint/actual-value comparison, conducted via a sum voltage regulator (10), for the voltage sum (UΣ) and the setpoint/actual-value comparison, conducted via a difference voltage regulator (11), for the voltage difference (UΔ) are used for forming the duty ratio (a1) for the first DC chopper converter (7) or the first system and the difference of the setpoint/actual-value comparison, conducted via the sum voltage regulator (10), for the voltage sum (UΣ) and the setpoint/actual-value comparison, conducted via the difference voltage regulator (11), for the voltage difference (UΔ) are used for forming the duty ratio (a2) for the second DC chopper converter (9) or the second system.

2. Method according to Claim 1, characterised in that a current regulation for the input currents of the converters (Is1, Is2, Is3, Is4) with the possibility of current limiting, the setpoint value ($Is_{soll}$) of which is proportional to the sum of the two output currents of the converters (Id1, Id2), is subordinated to the regulation for the sum voltage (UΣ).

3. Method according to Claim 2, characterised in that a damping regulator (45) is provided, at the input of which a quantity proportional to the difference of the input current of the overall circuit (Ie) and the input current of the converters (Is) is present and the output quantity of which is added to the setpoint value ($Is_{soll}$) of the subordinated current control loop.

4. Method according to one of the preceding Claims 1 to 3, characterised in that a quantity (A) which is proportional to the difference between the output currents (Id1, Id2) of the converters, is used as precontrol for the difference voltage regulation.

5. Method according to one of the preceding Claims 1 to 4, characterised in that a quantity (UN/2 $Ud_{soll}$), which is proportional to the input voltage (UN), is used as precontrol for the sum voltage regulation.

6. Method according to one of the preceding Claims 1 to 5, characterised in that the setpoint value ($Is_{soll}$) of the subordinated current control loop is formed by adding the output signal of the sum voltage regulator (10) to a steady-state controller current setpoint value ($Is_{soll}$) for the purpose of precontrol, the steady-state controller current setpoint value being proportional to the sum of the output currents (Id1, Id2).

7. Method according to one of the preceding Claims 1 to 6, characterised in that the absolute value of the difference voltage ($U\Delta$) is limited to the maximum permissible difference between the input voltages (UC1, UC2) at the converters (7, 9).

8. Method according to one of the preceding Claims 1 to 7, characterised in that the duty ratio of a step-up converter (a1H and a2H) and of a step-down converter (a1T and a2T) is formed from the common manipulated variable (a1 and, respectively, a2) in such a manner that, with a low input voltage (UN) and the step-down converter permanently switched on, the duty ratio of the step-up converter is identical to the common manipulated variable (a1 and, respectively, a2), that, with a high input voltage (UN) and the step-up converter permanently switched on, the duty ratio of the step-down converter is inversely proportional to the common manipulated variable (a1 or a2) and that, in the transition region between low and high input voltage, in which step-up and -down converters are cycling, the duty ratio of the step-down converter (a1T and, respectively, a2T) is formed as a quotient (a1H/a1 and, respectively, a2H/a2) between the duty ratio of the step-up converter and of the common manipulated variable.

9. Method according to one of Claims 1 to 8, characterised in that the common manipulated variable (a1 and, respectively, a2) is proportional to the ratio between input and output voltage of the converter (UC1/Ud1 and, respectively, UC2/Ud2) in the entire operating range.

10. Regulating arrangement for regulating the output voltages of two DC chopper converters which are connected in series at the input end, characterised in that the sum voltage ($U\Sigma$) of the output voltages (Ud1, Ud2) of the DC chopper converters (7, 9, 72, 92) is formed in a first summation point (14), in that a first comparison point (15) generates the difference between a setpoint value of the sum voltage ($U\Sigma_{soll}$) and the sum voltage ($U\Sigma$) and supplies it to a sum voltage regulator (10), in that a second comparison point (16) forms the difference voltage ($U\Delta$) of the output voltages (Ud1, Ud2) and supplies it to a difference voltage regulator (11), in that a second summation point (20) adds the output signals of the sum voltage regulator (10) and of the difference voltage regulator (11) and in that a third comparison point (21) subtracts the output signals of the sum voltage regulator (10) and of the difference voltage regulator (11) from one another, the output signals of the second summation point (20) and of the third comparison point (21) representing the duty ratios (a1, a2) for driving the DC chopper converters (7, 9).

11. Regulating arrangement according to Claim 10, characterised in that the output signal of the sum voltage regulator (10) is subtracted from a precontrol quantity (UN/2 $Ud_{soll}$) in a fourth comparison point (17), UN representing the direct voltage present at the DC chopper converters and $Ud_{soll}$ representing the output voltage setpoint value of a DC chopper converter.

## Revendications

1. Procédé de régulation des tensions de sortie de deux convertisseurs de courant continu ou systèmes de convertisseurs de courant continu, ayant leurs entrées branchées en série, et ayant chacun un comportement de convertisseur élévateur ou de convertisseur réducteur-élévateur, caractérisé par le fait que l'on forme et régule, en tant que grandeurs de réglage auxiliaires, la somme ($U\Sigma$ = Ud1 + Ud2) et la différence ($U\Delta$ = Ud1 - Ud2) des tensions de sortie (Ud1, Ud2) des convertisseurs de courant continu (7, 9, 72, 92), et l'on y fait appel pour former les rapports cycliques (a1, a2 et a11, a12, a21, a22 ou, selon le cas, a1H, a1T, a2H, a2T) pour la commande des convertisseurs de courant continu, la tension-somme ($U\Sigma$) étant comparée à une valeur de consigne de la tension-somme ($U\Sigma_{soll}$), et, respectivement, la tension-différence ($U\Delta$) étant comparée à une valeur de consigne de la tension-différence ($u\Delta_{soll}$), et par le fait que, pour former le rapport cyclique (a1) pour le premier convertisseur de courant continu (7), ou pour le premier système, on utilise la somme de la comparaison valeur de consigne-valeur réelle, transmise via un régulateur de tension-somme (10), pour la somme de tensions ($U\Sigma$) et de la comparaison valeur de consigne-valeur réelle, transmise via un régulateur de tension-différence (11), pour la différence de tension ($U\Delta$), et pour former le rapport cyclique (a2) pour le deuxième convertisseur de courant continu (9) ou pour le deuxième système on utilise la différence entre la comparaison valeur de consigne-valeur réelle, transmise par le régulateur de tension-somme (10), pour la tension-somme ($U\Sigma$), et la comparaison valeur de consigne-valeur réelle, transmise via le régulateur de tension-différence (11), pour la différence de tension ($U\Delta$).

2. Procédé selon revendication 1, caractérisé par le fait qu'à la régulation pour la tension-somme ($U\Sigma$) est subordonnée une régulation de courant, avec possibilité de limitation de courant, dédiée aux courants d'entrée du convertisseur (Is1, Is2, Is3, Is4), la valeur de consigne (Is$_{soll}$) étant proportionelle à la somme des deux courants 'de sortie des convertisseurs (Id1, Id2).

3. Procédé selon revendication 2, caractérisé par le fait qu'il est prévu un régulateur d'atténuation (45) à l'entrée duquel est présente une grandeur proportionnelle à la différence entre le courant (Ie) à l'entrée de l'ensemble du circuit et le courant (Is) à l'entrée du convertisseur, la grandeur de sortie de ce régulateur étant additionnée à la valeur de consigne (Is$_{soll}$) du circuit régulé subordonné.

4. Procédé selon l'une des revendications 1 à 3, caractérisé par le fait que l'on utilise, en tant que commande pilote pour la régulation de tensiondifférence, une grandeur (A) qui est proportionnelle à la différence des courants de sortie (Id1, Id2) des convertisseurs.

5. Procédé selon l'une des revendications 1 à 4, caractérisé par le fait que l'on utilise, en tant que commande pilote pour la régulation de tension-somme, une grandeur (UN/2 Ud$_{soll}$) qui est proportionnelle à la tension d'entrée (UN).

6. Procédé selon l'une des revendications 1 à 5, caractérisé par le fait que la valeur de consigne (Is$_{soll}$) de la boucle de régulation de courant subordonnée est formée, aux fins de la commande pilote, par addition du signal de sortie du régulateur de tension-somme (10) et d'une valeur de consigne stationnaire (Is$_{soll}$) de courant de convertisseur, cette valeur de consigne stationnaire de courant de convertisseur étant proportionnelle à la somme des courants de sortie (Id1, Id2).

7. Procédé selon l'une des revendications 1 à 6, caractérisé par le fait que la valeur absolue de la tension différence (U$\Delta$) est limitée à la différence maximale admissible entre les tensions d'entrée (UC1, UC2) présentes aux convertisseurs (7, 9).

8. Procédé selon l'une des revendications 1 à 7, caractérisé par le fait que le rapport cyclique d'un convertisseur élévateur (a1H; a2H) et d'un convertisseur réducteur (a1T et a2T) est formé à partir de la grandeur de réglage commune (a1; a2) de manière qu'avec une petite tension d'entrée (Un) et un convertisseur réducteur activé en permanence le rapport cyclique du convertisseur élévateur soit identique à la grandeur de réglage commune (a1; a2), et qu'avec une grande tension d'entrée (UN) et un convertisseur élévateur activé en permanence le rapport cyclique du convertisseur réducteur soit inversement proportionnel à la grandeur de réglage commune (a1 ou a2), et par le fait que, dans le domaine de transition entre petite et grande tension d'entrée, dans lequel les convertisseurs élévateur et réducteur sont rythmés, le rapport cyclique du convertisseur réducteur (a1T; a2T) est formé en tant que quotient (a1H/a1; a2H/a2) du rapport cyclique du convertisseur élévateur par la grandeur de réglage commune.

9. Procédé selon l'une des revendications 1 à 8, caractérisé par le fait que, dans l'ensemble du domaine de fonctionnement, la grandeur de réglage commune (a1; a2) est proportionnelle au rapport (UC1 /Ud1; UC2/Ud2) de la tension d'entrée à la tension de sortie du convertisseur.

10. Dispositif de régulation pour réguler la tension de sortie de deux convertisseurs de courant continu dont les entrées sont branchées en série, caractérisé par le fait qu'un premier moyen additionneur (14) forme la tension-somme (U$\Sigma$) des tensions de sortie (Ud1, Ud2) des convertisseurs de courant continu (7, 9, 72, 92), par le fait qu'un premier moyen comparateur (15) forme la différence entre une valeur de consigne de la tension-somme (U$\Sigma_{soll}$) et la tension-somme (U$\Sigma$) et la transmet à un régulateur de tension-somme (10), par le fait qu'un deuxième moyen de comparaison (16) forme la tension-différence (U$\Delta$) des tensions de sortie (Ud1, Ud2) et la transmet à un régulateur de tension-différence (11), par le fait qu'un deuxième moyen additionneur (20) additionne les signaux de sortie du régulateur de tension-somme (10) et du régulateur de tension-différence (11) et par le fait qu'un troisième moyen comparateur (21) soustrait l'un de l'autre les signaux de sortie du régulateur de tension-somme (10) et du régulateur de tension-différence (11), les signaux de sortie du deuxième moyen additionneur (20) et du troisième moyen comparateur (21) représentant les rapports cycliques (a1, a2) pour la commande des convertisseurs de courant continu (7, 9).

11. Dispositif selon revendication 10, caractérisé par le fait que, dans un quatrième moyen comparateur (17), le signal de sortie du régulateur de tension-somme (10) est soustrait d'une grandeur de commande pilote (UN/2 Ud$_{soll}$), UN représentant la tension continue appliquée aux convertisseurs de courant continu et Ud$_{soll}$ représentant la valeur de consigne de tension de sortie d'un convertisseur de courant continu.

Fig. 1

Fig. 2

Fig. 3

EP 0 361 254 B1

Fig. 4

EP 0 361 254 B1

Fig. 5